# EUROPEAN PATENT APPLICATION

(11) **EP 3 196 411 A2**
(43) Date of publication of application: **26.07.2017**
(21) Application number: 17152370.7
(22) Date of filing: 20.01.2017
(51) Int. Cl.: F01D 5/14, F01D 9/04, F01D 11/08, F01D 25/30

(54) **FLOW ALIGNMENT DEVICES TO IMPROVE DIFFUSER PERFORMANCE**

(30) Priority: 21.01.2016 IN 201641002286
(71) Applicant: General Electric Company, Schenectady, NY 12345 (US)
(72) Inventor: CHOUHAN, Rohit, 560066 Bangalore (IN); CHENGAPPA, Manjunath Bangalore, 560066 Bangalore (IN)
(74) Representative: Lee, Brenda

(57) **Abstract**

A turbine shroud 50 for an axial turbine 16, the shroud including: an annular array of arch shaped shroud segments 72 each configured to be mounted to an inner surface of a turbine casing, the segment having an arched seal surface aligned with tips of a last row of turbine buckets in the turbine, and vanes 64 positioned on an inner surface of each of the shroud segments and downstream in a direction of gas flow through the last row, the vanes extending inward from the inner surface towards an axis of the turbine.

## Description

### BACKGROUND OF THE INVENTION

The invention relates to axial turbines for gas turbines and particularly to the exhaust of the turbine and the transition to a diffuser.

Gases flow exhaust from an axial turbine and enter an exhaust diffuser that slows the gases to convert kinetic energy in the gas to pressure and reduced the static pressure applied by the gases to the turbine exit to, for example, below atmospheric pressure. Static pressure at turbine exit or diffuser inlet is also known as back pressure at the turbine exit.

The efficiency of the turbine depends, in part, on the back pressure at the turbine exit. An efficient turbine generates more work than does a less efficient turbine. The lower the back pressure the higher the efficiency of the turbine. An efficient exhaust diffuser creates a lower back pressure at the exit of the turbine than does a less efficient exhaust diffuser. Therefore, the efficiency of the exhaust diffuser affects the efficiency of the turbine and thus the amount of work generated by the turbine.

The performance of the exhaust diffuser is influences not only by the geometry of the flow passage through the exhaust diffuser. The performance is also influenced by span wise flow variations, e.g., flow variations from the axial center of the diffuser to the radially outward wall of the diffuser. Specifically, the span wise distribution of total pressure of the gases and the flow angle (swirl angle) of gases at the diffuser inlet have significant impact on diffuser performance. Total pressure is the sum of the static pressure and dynamic head, i.e. kinetic energy, of the exhaust gases. The exhaust diffuser converts the kinetic energy of the exhaust gases to recover gas pressure.

Turbine exhaust gases flow through the exhaust diffuser against an adverse pressure gradient, wherein the static pressure is lower at the diffuser inlet than at the diffuser exit. Also, the gas flowing near the walls (such as the casing wall or hub wall) of the exhaust diffuser must also overcome friction between the walls and the moving gas.

There must be sufficient kinetic energy in the gas flow near the walls of the diffuser to overcome the adverse pressure gradient and wall friction.

The total pressure in the exhaust gas near the wall of the diffuser may be reduced due to significant flow mixing losses near the wall due to tip shroud blockage, tip leakage, low momentum flow leakage from shroud and diffuser interface cavity. If the total pressure near the casing wall becomes too weak, the boundary layer of the flow near the wall will not have sufficient kinetic energy to avoid separation of the layer. The boundary layer is the gas layer near the wall that is influenced by wall friction. When the total pressure too weak in the boundary layer, the gas flow in the boundary layer separates from the wall and leads to inefficiency in the exhaust diffuser. Boundary layer separation reduces the efficiency of the diffuser in converting kinetic energy to pressure, and therefore increases the backpressure at turbine exit or diffuser inlet.

Maintaining a high total pressure near the diffuser casing wall relative to the mid span of the diffuser is difficult due to mixing loss present near casing wall. Low velocity leakage from interface cavity between the outlet of the turbine casing and tip leakage flow over the last stage of the turbine that have flow directions significantly different than the high velocities of the exhaust gases exiting the turbine and the swirl in the exhaust gases.

### BRIEF SUMMARY OF THE INVENTION

To suppress boundary layer separation at the inlet of the diffuser, vanes have been added to turbine shrouds surrounding the last stage of the turbine. The vanes are oriented to turn the combustion gases leaking between the tips of the buckets and the shroud. The leaking gases are turned towards the flow direction of the combustion gases leaving the trailing edges of the last stage of buckets. By turning the leaking gases towards the direction of the other gases leaving the last stage of the turbine, the mixing of these gases has less shear and lower total pressure loss than would result if the leaking gases were not turned.

A turbine shroud for an axial turbine has been conceived and is disclosed herein wherein the shroud includes: an annular array of arch shaped shroud segments each configured to be mounted to an inner surface of a turbine casing, the segment having an arched seal surface aligned with tips of a last row of turbine buckets in the turbine, and vanes positioned on an inner surface of each of the shroud segments and downstream in a direction of gas flow through the last row, the vanes extending inward from the inner surface towards an axis of the turbine.

An axial turbine has been conceived and is disclosed herein that includes: a row of turbine buckets in a last stage of the turbine; and an annular shroud forming an annulus around the row of turbine buckets, wherein the shroud includes an annular seal surface radially outward of tips on the turbine buckets and vanes downstream of the annular seal surface and of the row of turbine buckets, wherein the vanes extend radially inward of the seal surface.

### BRIEF DESCRIPTION OF THE DRAWINGS

FIG. 1 is a schematic diagram of a gas turbine.
FIG. 2 is a perspective view of a portion of the last stage of the turbine of the gas turbine showing the trailing edges of the turbine buckets.
FIG. 3 is a side view of a tip of a turbine bucket and the annular shroud surrounding the bucket with guide vanes.
FIGS. 4 and 5 are views of a segment of a turbine shroud showing the inner side of the segment (Fig. 4) and the segment in a perspective view (Fig. 5).
FIGS. 6, 7 and 8 show another segment a turbine shroud showing the inner side of the segment (Fig. 6), the segment in a perspective view (Fig. 7) and the segment in cross section (Fig. 8).

### DETAILED DESCRIPTION OF THE INVENTION

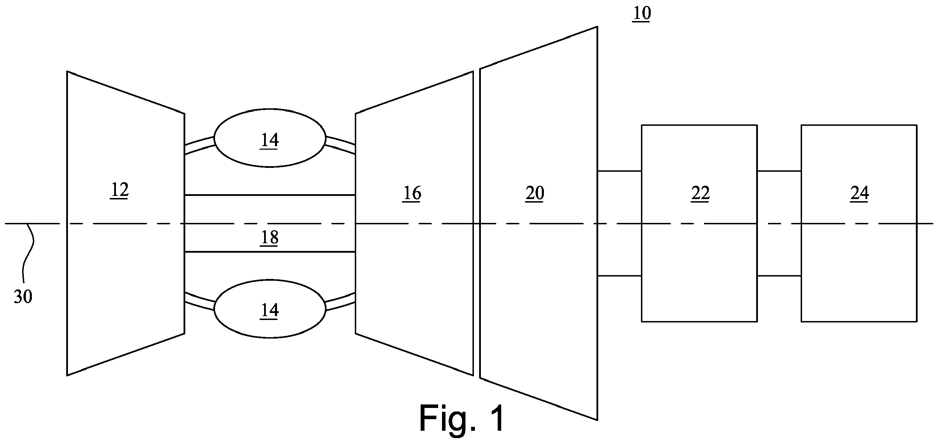

FIG. 1 shows a gas turbine 10 including a compressor 12, a combustor 14 and a turbine 16. The compressor ingests atmospheric air and gradually increases the air pressure by passing the air through annular rows of rotating compressor blades and stationary stator blades. In the combustor, the compressed air is mixed with fuel and combusted to generate high pressure combustion gases. As the combustion gases flow through the turbine, the gases turn turbine buckets (blades) arranged in annular rows. The turbine is connected by a shaft 18 to the compressor. By turning the buckets, the combustion gases turn the shaft to drive the compressor and produce useful work from the gas turbine.

The exhaust diffuser 20 receives the combustion gases from the turbine. The combustion gases slow in the exhaust diffuser as kinetic energy in the gases converts to an increase in static pressure. From the diffuser, the combustion gases may flow through a heat recovery steam generator (HRSG) and extraction systems 22 and environmental treatment devices 24, such as acoustic silencers and emission reduction devices. The static pressure of the exhaust gas needs to be greater than atmospheric pressure so that the exhaust gas will flow from the diffuser, through environmental control devices, and into the atmosphere.

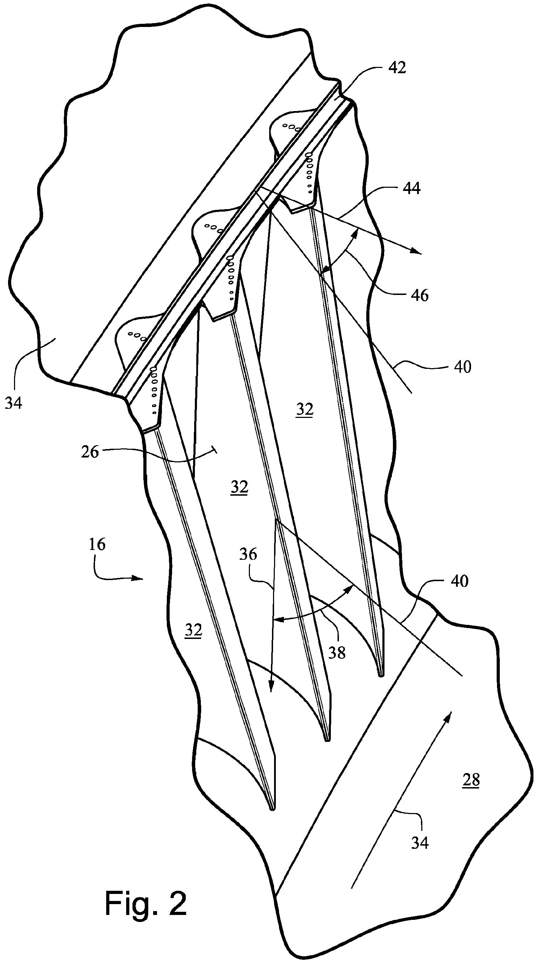

FIG. 2 illustrates a section of the turbine 16 and shows the downstream side of a few of the turbine buckets 26 in the last stage of the turbine. The turbine buckets are arranged in an annular array and mounted to a turbine wheel 28. The buckets and wheel rotate about the axis 30 (Fig. 1) of the gas turbine as combustion gases flow over the curved aerodynamic surfaces 32 of the buckets.

The combustion gases leave the last stage of buckets 26 in a swirling motion. The swirling is imparted by the rotation 34 of the turbine buckets and the curvature of the aerodynamic surface 32 each of the turbine buckets. The combustion gases leave the last stage of buckets along a certain flow direction 36. The direction may be helical due to the swirl of the gases. The flow direction has a radial component and an axial component. For purposes of this discussion, the axial component is represented by an angle 38 with respect to a line 40 parallel to the axis of the turbine. The flow direction of the combustion gases may vary along the length of the buckets, e.g., along a radial direction with respect to the axis. The flow direction at the radially outward end of the aerodynamic surfaces 32 of the buckets is most relevant to the present invention.

A small portion of the combustion gases flows over the tips 42 of the buckets. Gases flow over the tips despite seals between the tips and the stationary shrouds surrounding the tips. The gases flowing over the tips leave the buckets along a flow direction 44 having an axial angle 46 that is typically substantially different than the flow angle of the gases leaving the aerodynamic surfaces 32 of the buckets. Gases flow over the tips may have direction 44 that may have an angle greater than 40 degree from direction 36 of gases leaving aerodynamic surfaces.

The differences in flow directions 44, 36 cause the gas flows to shear and create higher mixing loss as the gases from the bucket tips mix with the gases from the curved aerodynamic surfaces of the blades. Shear and mixing can also be caused by air flow between the annular gap between turbine exit and inlet to the exhaust diffuser. The shear and mixing between the flow through the annular gap between the turbine and diffuser, the flow leaking over the tips and the flow from the aerodynamic surfaces of the blades occurs near the surface of the turbine casing and generates losses resulting a total pressure loss and swirl angle which could further instigate the flow separation in boundary layer.

Flow separation at the casing surface, especially near the transition between the turbine and exhaust diffuser can reduce the efficiency of the conversion of kinematic energy to static energy in the exhaust diffuser and create unwanted higher backpressure to the exhaust gas leaving the turbine. Accordingly, there is a long felt desire to improve the efficiency of the exhaust diffuser and reduce backpressure at the exit of the turbine.

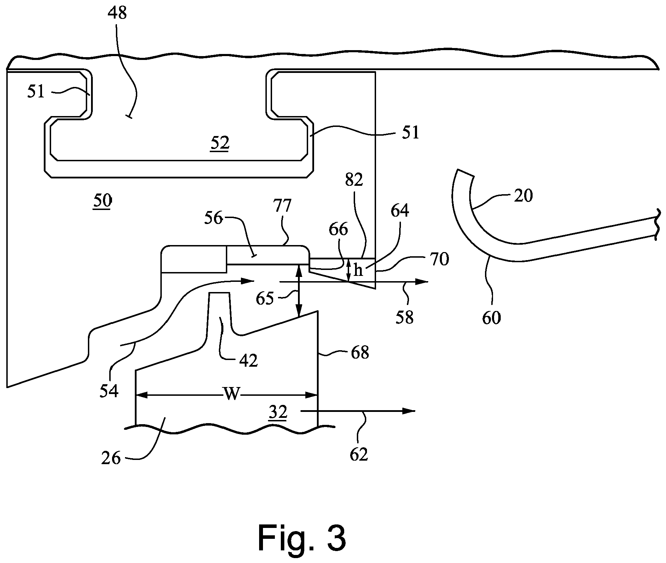

FIG. 3 is a side view of a portion of a casing 48 of the turbine and a turbine bucket 26. An annular shroud 50 is mounted to a hook(s) at the inner circumference of the casing 48. The annular shroud may be segmented into arch shaped sections and arranged in a circle as they are mounted to the casing. The annular shroud 50 extends around the tips 42 of a row of turbine buckets.

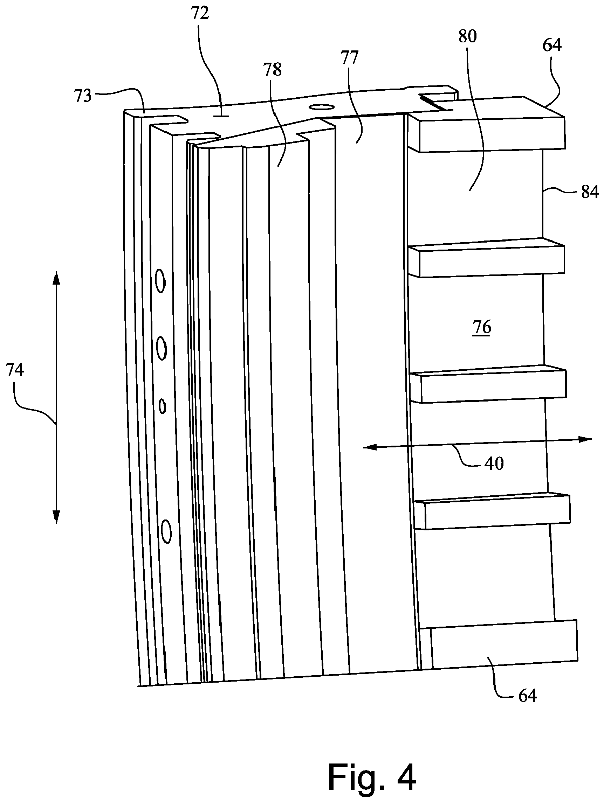

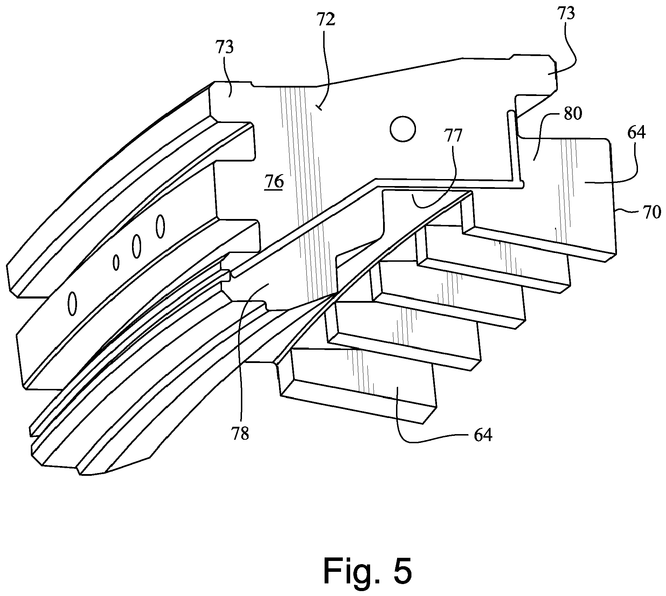

The annular shroud 50 may be formed of arched shaped shroud segments 72 (Figs. 4 and 5) that are arranged in an annular array and mounted to the turbine casing 48. The shroud segments may each include a slot 51 on their outer sides. The slot receives a hook(s) 52 extending radially inward from the turbine casing. The shroud segments are mounted to the hook as they are arranged in an annular array. Alternatively, the hook may be on the shroud segments (see Figs. 4 and 5) and the slot may be in the turbine casing.

The shroud forms a seal with the tip of the bucket to substantially prevent the flow 54 hot combustion gases over the tips of the buckets. Flow over the tip of the buckets is prevented to force the hot combustion gases to flow over the aerodynamic surfaces 32 of the buckets and turn the row of buckets. Gases 54 that flow over the tips do not force the row of buckets to turn and thus do not perform useful work.

The shroud typically includes an abradable annular surface 56 that faces the tip rail 42 of each bucket in the last stage of the turbine. The abradable annular surface may be a ceramic or other material that abrades when rubbed by the tip of a bucket. The tip rail 42 and the abradable annular surface 56 form the seal that substantially prevents the flow of hot gases 54 over the tips of the buckets.

Despite the seal, some gases 58 flow through the seal and downstream of the row of buckets. These gases flow 58 near the turbine casing and are at the radially outermost region of the flow path at the exhaust of the turbine. The gases 58 tend to be in the gases flowing against the inner surface 60 of the exhaust diffuser 20.

Most of the combustion gases 62 leaving the turbine flow over the aerodynamic surfaces 32 of the turbine buckets and between the buckets. These combustion gases 62 will mix with the combustion gases 58 that have leaked over the tips of the buckets.

The inventors recognized that disorderly mixing of gas flows 58, 62 would results in total pressure and flow angle (swirl angle) which is detrimental to diffuser performance. They also recognized that the loss on total pressure and non-optimum flow angle of mix gas near the surface 60 of the exhaust diffuser and could provoke separation of the boundary layer of gas flow adjacent the surface. Further, the inventors recognized that the mixing loss near casing between flows 58, 62 was due, at least in part, to the offsetting flow angles of the two flows.

To facilitate the better alignment and improved mixing of the flows 58, 62, vanes 64 are added to the shroud 50. The vanes turn the flow 58 leaking between the tips of the bucket and the abradable seal 56. The flow 58 is turned to have a flow angle with respect to the axis that is closer to the flow angle of the gases leaving the aerodynamic surfaces 32 of the buckets.

The vanes 64 are in an annular array immediately downstream of the tip rail of buckets of the last stage of the turbine. The vanes 64 may be symmetrically arranged around the circumferences of the shroud, such as at intervals of one, two or five degrees of arc to form an annular array with a center at the axis of the turbine.

The vanes may each have a leading edge 66 that is radially aligned with the trailing edge 68 of the buckets. Or, the leading edges 66 of the vanes may extend upstream of the trailing edges of the buckets by, for example, two percent (2%) to fifteen percent (15%) of the width (w) of the buckets, wherein the width is the same as the chord length of a radially outward end of the bucket. The width of the vanes between the leading edge 66 and their downstream end 70 may be relatively short as compared to the width of the buckets. For example, the width of the vanes may be between one tenth and two thirds of a chord length of the buckets in the last stage buckets.

The height (h) of the vanes, along a radial direction, is sufficient for the vanes to protrude into and optionally entirely through the gas flow leaking over the tips of the bucket. The height (h) of the vanes is a distance between a radially inner surface of the abradable seal 56 and the radially inward most portion of the lower edge of the vane. The height (h) may be in a range between one -fourth and two fold of the narrowest gap 65 between the upper end of the bucket (not including the tip 42) and the inner surface of the abradable seal.

The vanes turn the gas leaking over the bucket tips to a flow angle that is the same as or similar to the flow angle of the gas leaving the aerodynamic surface of the buckets. The angle formed by the vanes may turn the gases flowing over the tips of the buckets to an angle that is within 10 degrees, or 15, 20 or 35 degrees, of the flow angle of the gases leaving the aerodynamic surfaces of the buckets. Turning the gas flow reduces the total pressure loss that results as the gas leaking over the bucket tips mixes with the gas from the aerodynamic surfaces of the turbine buckets. Also, the flow angle of gases near the casing wall after being mix together is closer to the axial direction than is the flow of gas leaking over the bucket tips. Improved total pressure and flow angle of gases reduces the risk of boundary layer separating near the inlet to the exhaust diffuser and thereby improves the efficiency of the exhaust diffuser and reduces the backpressure at the exhaust of the turbine.

The vanes may be on an extension of the annular shroud for the last stage of the turbine. A conventional annular shroud has an axial length substantially similar to the axial length of the base of a turbine bucket. To accommodate the vanes, the extension is formed, e.g., integrally formed of a single piece, at the axial end of the shroud. The extension has an annular inner wall which is at a radially position substantially the same as the radial position of the abradable surface on the shroud.

The vanes extend radially inward from the inner surface of the extension. The vanes may be integrally formed with the remainder of the shroud such that the shroud with vanes is a single piece component. For example, the shroud may be formed in arched shaped sections by molding a ceramic or metal composition.

FIGS. 4 and 5 are views of a segment 72 of a turbine shroud showing the inner side of the segment (Fig. 4) and the segment in a perspective view (Fig. 5). The shroud segment has an arch shape in a circumferential direction 74. A series of the shroud segments 72 are arranged in an annular array and mounted to the turbine casing to form an annular housing around the tips of the row of turbine buckets. The shroud segments 72 are arranged end 76 to end to form the annular housing. The radially outer region of the shroud segments include hooks 73 that engage slots in the turbine casing to mount the segments within the turbine.

Each shroud segment includes a seal support surface 77 that receives and supports the abradable seal 56 (Fig. 3). The seal support surface 77 may itself be abradable seal in some embodiments of the shroud segment. While the shroud segments are arranged in an annular array, the seal support surfaces 77 form an annular surface aligned with and near the tips of the turbine buckets. The abradable seals 56 are between the seal support surface and the tips of the buckets. The seal support surface 77 may be parallel to the axis of the turbine.

Forward, in an axial direction, of the seal surface 56 are mounts 78 for nozzles (not shown). The nozzles (also referred to as vanes) are stationary and form an annular array immediately upstream of the row of buckets 26 (Fig. 2). The nozzles are in the path of hot combustion gases that flow through the turbine. The nozzles direct the combustion gases to the last row of buckets 26.

The vanes 64 on the shroud segments 72 are immediately downstream, in the direction of combustion gas flow, of the seal surface 56. The vanes 64 may be included in an extension 80 that is axially downstream of the remainder of the shroud segment. The extension 64 may include the vanes and an annular region having a surface 82 that is axially aligned with the inner surface of the abradable seal 56 (fig. 3). The surface 82 may alternatively taper radially inward or outward. The surface 82 has an axially end 84 at the trailing edges 70 of the vanes. The surface end 84 and the trailing edges of the vanes face and are adjacent a transition between the end of the turbine and the inlet end 20 of the exhaust diffuser (Fig. 3).

The vanes 64 shown in Figs. 4 and 5 are straight in an axial direction and are parallel to a line 40 that is parallel to the axis of the turbine. The vanes will turn the flow of combustion gases leaking between the tips and abradable seal towards an axial direction, which is along line 40.

The angle between the vanes and a line parallel to the axis of the turbine may be selected during the design of the shroud segment. The angle may be selected to turn the gas flow leaking between the tips of the buckets and the abradable seal towards the direction of gas flow leaving the aerodynamic surfaces of the buckets. The angle may be zero degrees, such as are the vanes 64 shown in Figures 4 and 5. The angle may also be in any of a range of zero to five, ten, fifteen, twenty or more degrees with respect to the axis in clockwise or anticlockwise direction.

The vanes are also shown in Figures 4 and 5 as extending inward in a radial direction. The radially inward edges lower surfaces of the vanes extend along radial lines, as shown in Figs. 4 and 5, will tend to not cause the gases to turn an a radial direction. If there is a desire to turn the gases leaking over the tips of the buckets, the vanes may be angled in a radial direction to cause the gases to turn radially inward and promote rapid mixing of the gases with the gases leaving the aerodynamic surfaces of the buckets.

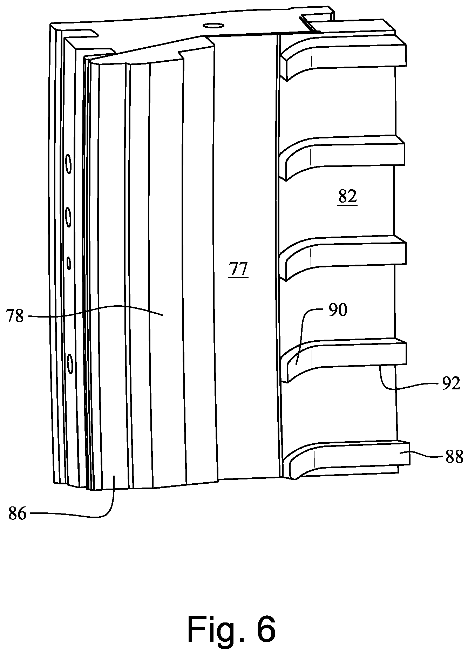

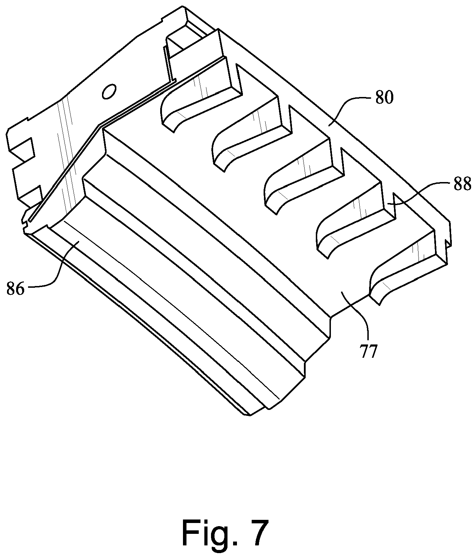

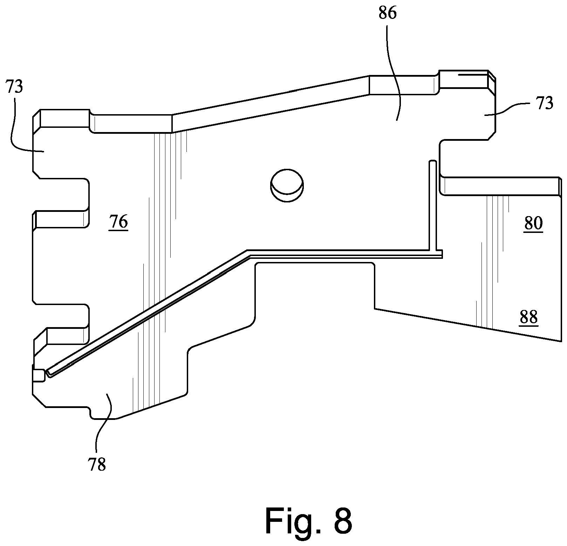

FIGS. 6, 7 and 8 show another segment 86 a turbine shroud which is similar in most respect to the shroud segment 72 shown in Figures 4 and 5. A difference between the shroud segments is that the vanes 88 are curved along an axial direction. As best seen in Figure 6, the vanes 88 have a curved segment 90 at the upstream section of the vanes and a straight segment 92 at a downstream section. The curvature of the vanes promotes the turning of the gases leaking over the tips of the buckets. The amount and spread of curvature and the angles formed by the segments of the vanes and the axis are matters of design choice and may selected to turn the gases towards the flow of the gases leaving the aerodynamic surfaces of the buckets.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

Various aspects and embodiments of the present invention are defined by the following numbered clauses:
1. A turbine shroud for an axial turbine, the shroud comprising:
   an annular array of arch shaped shroud segments each configured to be mounted to an inner surface of a turbine casing, the segment having an arched seal surface aligned with tip rail of a last row of turbine buckets in the turbine, and
   vanes positioned on an inner surface of each of the shroud segments and downstream to tip rail in a direction of gas flow through the last row, the vanes extending inward from the inner surface towards an axis of the turbine.
2. The turbine shroud of clause 1, wherein each of the vanes is arranged at an angle with respect to the line parallel to the axis and extending through the vane, and the angle is in a range of zero to forty degrees.
3. The turbine shroud of any preceding clause, wherein the angle of each vane is configured to turn gas flow through the vane towards a flow direction of gases leaving trailing edges of an aerodynamic surface on each of the turbine buckets.
4. The turbine shroud of any preceding clause, wherein the vanes are arranged symmetrically around the axis of the turbine.
5. The turbine shroud of any preceding clause, wherein the vanes are at least one of equal in number to a number of the turbine blades in the last row, and arranged at regular intervals wherein the intervals are angles in a range of half degrees to five degrees.
6. The turbine shroud of any preceding clause, wherein the vanes each have an axial length of between one tenth and two thirds a length of a chord of the buckets in the last row.
7. The turbine shroud of any preceding clause, wherein the vanes extend radially inward a distance from a seal surface on the shroud segment in a range of one fourth to two fold of a distance between an upper end of the buckets in the last row.
8. The turbine shroud of any preceding clause, wherein the vanes are each straight in an axial direction.
9. The turbine shroud of any preceding clause, wherein the vanes include a partial or full curved section extending in an axial direction.
10. An axial turbine comprising:
   a row of turbine buckets in a last stage of the turbine; and
   an annular shroud forming an annulus around the row of turbine buckets, wherein the shroud includes an annular seal surface radially outward of tips on the turbine buckets and vanes downstream of the annular seal surface and of the row of turbine buckets, wherein the vanes extend radially inward of the seal surface.
11. The axial turbine as in any preceding clause, wherein the vanes are upstream of an inlet to an exhaust diffuser.
12. The axial turbine of any preceding clause, wherein each of the vanes is arranged at an angle with respect to the line parallel to the axis and extending through the vane, and the angle is in a range of zero degrees to forty degrees.
13. The axial turbine of any preceding clause, wherein the angle of each vane is configured to turn gas flow through the vane towards a flow direction of gases leaving trailing edges of an aerodynamic surface on each of the turbine buckets.
14. The axial turbine of any preceding clause, wherein the vanes are arranged symmetrically around an axis about which the row of buckets rotate.
15. The axial turbine of any preceding clause, wherein the vanes each have an axial length of between one tenth and two thirds a length of a chord of the buckets in the last row.
16. The axial turbine of any preceding clause, wherein the vanes extend radially inward a distance from the annular seal surface in a range of one fourth to two fold of a distance between an upper end of the buckets in the last row.
17. The axial turbine of any preceding clause, wherein the vanes are arranged symmetrically about the annular shroud.
18. The axial turbine of any preceding clause, wherein the vanes include a partial or full curved section extending in an axial direction.
19. The axial turbine of any preceding clause, wherein the annular shroud is formed by an annular array of shroud segments and each segment includes a plurality of the vanes.
20. The axial turbine of any preceding clause, wherein the shroud segments are mounted to an inside region of a casing housing the turbine.

## Claims

1. A turbine shroud for an axial turbine, the shroud comprising:
an annular array of arch shaped shroud segments each configured to be mounted to an inner surface of a turbine casing, the segment having an arched seal surface aligned with tip rail of a last row of turbine buckets in the turbine, and
vanes positioned on an inner surface of each of the shroud segments and downstream to tip rail in a direction of gas flow through the last row, the vanes extending inward from the inner surface towards an axis of the turbine.

2. The turbine shroud of claim 1, wherein each of the vanes is arranged at an angle with respect to the line parallel to the axis and extending through the vane, and the angle is in a range of zero to forty degrees.

3. The turbine shroud of claim 2, wherein the angle of each vane is configured to turn gas flow through the vane towards a flow direction of gases leaving trailing edges of an aerodynamic surface on each of the turbine buckets.

4. The turbine shroud of claim 1, 2 or 3, wherein the vanes are arranged symmetrically around the axis of the turbine.

5. The turbine shroud of any of claims 1 to 4, wherein the vanes are at least one of equal in number to a number of the turbine blades in the last row, and arranged at regular intervals wherein the intervals are angles in a range of half degrees to five degrees.

6. The turbine shroud of any preceding claim, wherein the vanes each have an axial length of between one tenth and two thirds a length of a chord of the buckets in the last row.

7. The turbine shroud of any preceding claim, wherein the vanes extend radially inward a distance from a seal surface on the shroud segment in a range of one fourth to two fold of a distance between an upper end of the buckets in the last row.

8. The turbine shroud of claim 1, wherein the vanes are each straight in an axial direction.

9. The turbine shroud of claim 1, wherein the vanes include a partial or full curved section extending in an axial direction.

10. An axial turbine comprising:
a row of turbine buckets in a last stage of the turbine; and
an annular shroud forming an annulus around the row of turbine buckets, wherein the shroud includes an annular seal surface radially outward of tips on the turbine buckets and vanes downstream of the annular seal surface and of the row of turbine buckets, wherein the vanes extend radially inward of the seal surface.

11. The axial turbine as in claim 10, wherein the vanes are upstream of an inlet to an exhaust diffuser.

12. The axial turbine of claim 10 or 11, wherein each of the vanes is arranged at an angle with respect to the line parallel to the axis and extending through the vane, and the angle is in a range of zero degrees to forty degrees.

13. The axial turbine of claim 12, wherein the angle of each vane is configured to turn gas flow through the vane towards a flow direction of gases leaving trailing edges of an aerodynamic surface on each of the turbine buckets.

14. The axial turbine of claim 10, 11, 12 or 13, wherein the vanes are arranged symmetrically around an axis about which the row of buckets rotate.

15. The axial turbine of any of claims 10 to 14, wherein the vanes each have an axial length of between one tenth and two thirds a length of a chord of the buckets in the last row.
